# EUROPÄISCHE PATENTANMELDUNG

(11) **EP 1 450 080 A1**
(43) Veröffentlichungstag der Anmeldung: **25.08.2004**
(21) Anmeldenummer: 04003613.9
(22) Anmeldetag: 18.02.2004
(51) Int. Cl.: F16J 1/16, F02F 3/00, F16J 1/14

(54) **Kolben für einen Verbrennungsmotor, Kombination eines Kolbens mit einem Kolbenbolzen und /oder einem Pleuel, und Verfahren zu deren Herstellung**

(30) Priorität: 18.02.2003 DE 10306694
(71) Anmelder: Federal-Mogul Nürnberg GmbH, 90441 Nürnberg (DE)
(72) Erfinder: Obermeier, Karl-Heinz, 91593 Burgbernheim (DE); Linz, Roland, 90471 Nürnberg (DE); Harrer, Josef, 91161 Hilpoltstein (DE)
(74) Vertreter: HOFFMANN - EITLE

(57) **Zusammenfassung**

Ein Kolben für einen Verbrennungsmotor weist eine Kolbenbuchse zur Aufnahme eines Kolbenbolzens auf, die aus austenitischem Grauguss oder aus austenitischem Stahl besteht.

Bei einem Verfahren zur Herstellung eines Kolbens für einen Verbrennungsmotor wird eine Kolbenbuchse aus austenitischem Grauguss gegossen, nachfolgend bearbeitet und in die Bohrung des Kolbens eingesetzt.

## Beschreibung

### Technisches Gebiet

Die Erfindung betrifft einen Kolben für einen Verbrennungsmotor nach dem Oberbegriff des Anspruchs 1, eine Kombination eines Kolbens mit einem Kolbenbolzen und/oder einem Pleuel, sowie ein Verfahren zu deren Herstellung.

Die Verbindung zwischen den hin- und hergehenden Kolben eines Verbrennungsmotors und der sich drehenden Kurbelwelle erfolgt durch Pleuel, die an ihre beiden Enden Bohrungen oder sogenannte Augen aufweisen. Mittels einer dieser Bohrungen wird das Pleuel an den Kolben dadurch befestigt, dass ein sogenannter Kolbenbolzen durch geeignete Bohrungen des Kolbens sowie durch das Auge des Pleuels gesteckt wird. Das andere, größere Auge des Pleuels befindet sich an einem sogenannten Hubzapfen der Kurbelwelle. Durch die Rotation des Hubzapfens der Kurbelwelle wird das Pleuel ausgelenkt und das kleinere Pleuelauge führt eine Drehbewegung um die Kolbenbolzenachse aus. In der angebrachten Stellung kann der Kolben bezüglich des Pleuels zumindest geringfügig verkippen. Diese Kippbewegung ist von dem Bolzenversatz, der Schwerpunktlage und dem Kurbelwinkel abhängig.

### Stand der Technik

Auf Grund dieser Dreh- und Kippbewegung des Kolbens bezüglich des Pleuels kann es auch zu Verdrehungen des Kolbenbolzens in den Bohrungen des Kolbens kommen. Dies tritt insbesondere bei relativ hohen Verbrennungsdrücken auf, bei denen die meist schmalere Lagerstelle im kleinen Pleuelauge die höchsten Reibkräfte aufweist. Es gibt jedoch auch sogenannte Klemmpleuel, bei denen diese Bewegungen immer zwischen Bolzen und Kolben stattfinden. Um diesen Gegebenheiten Rechnung zu tragen, werden üblicherweise sogenannte Kolbenbuchsen zur Aufnahme des Kolbenbolzens in die Bohrungen des Kolbens eingesetzt. Diese Buchsen bestehen herkömmlicherweise aus Buntmetallen, beispielsweise Messing oder Bronze. Diese Buchse unterliegen jedoch einer gewissen Fressneigung mit dem Kolbenbolzen. Diese kann äußerst zerstörerische Ausmaße annehmen. Hierbei sind sowohl selbstausheilende Mikroreiber, die jedoch unerwünscht sind, als auch ein vollständiges Fressen möglich, das dadurch, dass sich die Buchse bezüglich des Kolbens verdreht, zum Ausfall des gesamten Bauteils führen kann. Herkömmlich wurde versucht, diese Probleme dadurch zu lösen, dass Formbohrungen unterschiedlichster Ausführungen in die Buchsen eingebracht werden. Ferner wurde versucht, die Kolbenbolzen mit PVD/CVD-Schichten, beispielsweise mit DLC (Diamond Like Carbon), WCC (Wolframkarbid-Kohlenstoff) oder verschiedenen galvanischen Schichten zu beschichten. Derartige Maßnahmen sind jedoch kostspielig. Darüber hinaus ist bereits das Basismetall der Buntmetallbuchsen vergleichsweise teuer.

Ein Kolben nach dem Oberbegriff des Anspruchs 1 ist als Vorbenutzungsgegenstand bekannt. Die DE 726 157 C offenbart einen Leichtmetallkolben, in dessen Bolzenaugen Lagerringe aus Stahl oder Gusseisen eingegossen sein können. Ein derartiges Verfahren, nämlich das Eingießen eines Lagerringes, kann jedoch nicht zuverlässig eine feste Verbindung mit dem Kolben sicherstellen. Vielmehr kann sich ein derartiger Verbund lockern, was zu Geräuschen oder sogar zur Zerstörung des Bauteils führen kann.

Aus der DE 44 14 095 A1 ist ein Verfahren zum Verbinden zweier Werkstücke aus Metall zu einem Verbundbauteil bekannt, bei dem zunächst ein Kolben, beispielsweise aus einer Aluminiumlegierung, hergestellt wird. Hierbei werden Aussparungen vorgesehen, die mit einem Umgussmaterial aufgefüllt werden. Dieses Material kann einen Ringträger und eine Halbschale in einer Bolzenbohrung bilden und aus austenitischem Grauguss bestehen.
Die DE 32 48 925 C2 beschreibt einen Kolben, der einen Verbrennungseinsatz aus austenitischem Gusseisen aufweist, der mittels eines Presssitzes in dem Kolben angebracht ist.

Aus der DE 197 04 224 A1 ist eine Verbindungsanordnung zwischen einem Hubkolben und einer Pleuelstange bekannt, bei welcher der Kolbenbolzen mit einer Beschichtung versehen ist und unmittelbar in dem Kolben gelagert ist. Mit anderen Worten wird gemäß diesem Stand der Technik eine Kolbenbuchse vermieden.

Dies gilt in ähnlicher Weise für die Offenbarung der FR 2 669 689, wonach ein Pleuel-Auge mittels eines PVD-Verfahrens beschichtet wird, und eine gesonderte Buchse dadurch verzichtbar wird. Es ist ferner angegeben, dass auch der Kolbenbolzen in dieser Weise beschichtet werden könnte.

### Darstellung der Erfindung

Der Erfindung liegt die Aufgabe zu Grunde, einen Kolben, eine Kombination eines Kolbens mit einem Kolbenbolzen und/oder einem Pleuel, sowie ein Verfahren zu deren Herstellung zu schaffen, die kostengünstig sind und die Anforderungen im Hinblick auf Festigkeit und Temperaturbeständigkeit erfüllen.

Die Lösung dieser Aufgabe erfolgt zum einem durch den in Anspruch 1 beschriebenen Kolben.

Demzufolge weist der erfindungsgemäße Kolben für einen Verbrennungsmotor eine Buchse zur Aufnahme des Kolbenbolzens auf, die aus austenitischem Grauguss besteht. Dieses Material ist äußerst kostengünstig und verringert deshalb bereits die Kosten für das verwendete Basismaterial. Dieses muss darüber hinaus nicht in kostspieliger Art und Weise mit Beschichtungen versehen werden. Darüber hinaus sind keine Formbohrungen oder die sonst erforderlichen Sonderovalitäten notwendig. Neben diesen wirtschaftlichen Vorteilen wurde für Graugussmaterial herausgefunden, dass es die Anforderungen im Hinblick auf Festigkeit und Temperaturbeständigkeit erfüllt.

Insbesondere kann das Graugussmaterial durch Graphit, insbesondere in Lamellenform im Grundgefüge derart ausgebildet werden, dass es zu einem gewissen Ausmaß selbstschmierend ist und somit die auftretenden Bewegungen des Kolbenbolzens in den Kolbenbuchsen aufnimmt und zulässt, ohne dass die Gefahr eines Fressens besteht. Dadurch, dass eine vollständige Kolbenbuchse aus dem beschriebenen Material besteht, muss diese nicht in den Kolben eingegossen werden. Hierdurch können in vorteilhafter Weise die beim Eingießen entstehenden Probleme, im Hinblick auf eine schlechte Bindung und eine Lockerung, vermieden werden.

Austenitischer Grauguss als Material für die Kolbenbuchse ist darüber hinaus äußerst vorteilhaft, insbesondere in einem Leichtmetallkolben, weil es einen Wärmeausdehnungskoeffizienten aufweist, der demjenigen von Aluminium sehr ähnlich ist. Insofern ist auch bei den im Betrieb stets auftretenden Temperaturschwankungen eine zuverlässige Verbindung gewährleistet. Darüber hinaus besitzt austenitischer Grauguss in vorteilhafter Weise eine hohe Druckfestigkeit.

Alternativ kann die Kolbenbuchse aus austenitischem Stahl bestehen. Ein derartiger Werkstoff führt im Hinblick auf die Kolbenbuchse zu den gleichen Vorteilen wie die vorangehend beschriebene Kolbenbuchse aus austenitischem Grauguss. Insbesondere kann auch ein Kolben mit einer derartigen Buchse aus austenitischem Stahl in vorteilhafter Weise mit einem Kolbenbolzen in einer der nachfolgend beschriebenen Ausführungsformen und/oder einem Pleuel in einer der nachfolgend beschriebenen Ausführungsformen kombiniert werden.

Bevorzugte Weiterbildungen sind in den weiteren Ansprüchen beschrieben.

Besonders vorteilhafte Ergebnisse wurde mit Material aus Grauguss erzielt, das Lamellengraphit aufweist. Das Auftreten von Graphit in Lamellenform führt zu besonders günstigen Eigenschaften im Hinblick auf die Selbstschmierung. Im Hinblick auf austenitisches Gusseisen mit Lamellengraphit sei auf die DIN 1694 und DIN EN 1562 verwiesen, in denen derartige Werkstoffe beschrieben und spezifiziert sind. Wenngleich für den erfindungsgemäßen Kolben die Verwendung von Gusseisen mit Lamellengraphit bevorzugt wird, sei erwähnt, dass sich auch Gusseisen mit Kugelgraphit (globularem Graphit) hierfür eignet.

Als besonders bevorzugtes Material hat sich das unter der Bezeichnung "Ni-Resist" bekannte Material herausgestellt. Hierbei handelt es sich um ein spezielles austenitisches Gusseisenmaterial, das einen Nickelgehalt von 13,5 bis 36 % aufweisen kann. Nickel als Legierungsmaterial wirkt hierbei als Mittel zur Verfeinerung der Korngröße und verhindert die Ausbildung von zu groben Körnern. Ni-Resist weist besonders gute Eigenschaften im Hinblick auf die Korrosionsbeständigkeit auf. Ferner ist dieses Material, das bislang auf dem Gebiet der Kolbenbuchsen nicht verwendet wurde, dadurch für diesen Anwendungsfall besonders gut geeignet, dass es gute Abriebeigenschaften aufweist. Weitere Legierungsbestandteile von Ni-Resist sind Silizium, Mangan, Kupfer, Chrom, Schwefel und Kohlenstoff, der, wie oben ausgeführt, vorteilhafterweise als Graphit vorliegt. Als besonders bevorzugtes Material für die Kolbenbuchsen des erfindungsgemäßen Kolbens sei GGL Ni CuCr 1562 genannt. Dieses Material wurde bislang lediglich als Kolbenringträger-Material eingesetzt und wird im Rahmen der Erfindung erstmalig als Material für Kolbenbuchsen vorgeschlagen. Bei Versuchen haben sich für dieses Material besonders gute Ergebnisse erzielen lassen. Im Hinblick auf Ni-Resist allgemein sei auf die Tabelle verschiedener Arten von Ni-Resist verwiesen, die sich unter www.geocities.com/cape canaveral/lab/3495/castiron/resist findet.

Bei internen Versuchen wurden besonders günstige Eigenschaften im Hinblick auf die Verschleißfestigkeit für eine Kombination eines Kolbens in einer der vorangehenden Ausführungsformen mit einem Kolbenbolzen festgestellt, der beschichtet ist. Die Beschichtung des Kolbenbolzens kann eine der nachfolgend wiedergegebenen Ausführungen aufweisen. Es ist zu betonen, dass ein beschichteter Kolbenbolzen, insbesondere mit einem oder mehreren der nachfolgend angegebenen Merkmale auch unabhängig von dem vorangehend beschriebenen Kolben als Neuerung und als Gegenstand der vorliegenden Anmeldung zu betrachten ist. Insbesondere sei erwähnt, dass mit dem vorangehend und nachfolgend beschriebenen Kolbenbolzen auch ein Kolben verwendet werden kann, der zwar eine Buchse aus Grauguss, jedoch nicht notwendigerweise als austenitischem Grauguss aufweist. Es sei an dieser Stelle ferner erwähnt, dass der Kolben in Kombination mit dem vorangehend und nachfolgend beschriebenen Kolbenbolzen auch eine Formbohrung aufweisen kann. In diesem Fall wird für den Kolben bevorzugt, dass er buchsenlos ausgeführt ist. Im Hinblick auf die Gestaltung dieser Formbohrung im Einzelnen sei auf die nachfolgende Beschreibung für mögliche Formbohrungen des Pleuel-Auges verwiesen. Derartige Formbohrungen können bei einem Kolben, gegebenenfalls in Kombination mit einem beschichteten Kolbenbolzen, Verwendung finden.

Für den beschriebenen, beschichteten Kolbenbolzen wurden besonders gute Merkmale bei einer Beschichtung mit amorphem Kohlenstoff und/oder DLC (diamond-like carbon) festgestellt.

Es wird ferner derzeit eine Beschichtung bevorzugt, die aus einer Grundschicht und einer verschleißfesten Laufschicht besteht. Für die Laufschicht wird derzeit Hartkohlenstoff bevorzugt.

Für besondere Anwendungsfälle kann der Kolbenbolzen ferner ein Einlaufschicht aufweisen.

Schließlich wurden bei Versuchen gute Ergebnisse für eine Ausführungsform festgestellt, bei welcher die Beschichtung des Kolbenbolzens mittels eines PVD- (plasma vapour deposition)-Verfahrens aufgebracht wurde.

Wenngleich jegliche geeignete Materialien für den Kolbenbolzen denkbar sind, wird derzeit Stahl bevorzugt. Alternativ könnte der Kolben beispielsweise aus Keramik sein.

Die Erfindung betrifft ferner eine Kombination eines Kolbens in einer der vorangehend beschriebenen Ausführungsformen oder in Kombination mit einem Kolbenbolzen, wie vorangehend beschrieben, mit einem Pleuel. Hierbei kann das Pleuel eine übliche Buchse aufweisen, oder buchsenlos ausgeführt sein. Vorteile können jedoch erzielt werden, wenn das Pleuel-Auge eine Formbohrung mit einer vorzugsweise quer ausgerichteten Ovalität und/oder eine Erweiterung an zumindest einem Ende der Bohrung aufweist. Die zuletzt beschriebene Ausführungsform kann als "Trompetenform" beschrieben werden.

Ferner hat sich herausgestellt, dass auch in dem Pleuel-Auge eine Buchse aus Grauguss, vorzugsweise aus ferritischem Grauguss zu Vorteilen führt. Diese liegen im Wesentlichen in den gleichen Umständen begründet, wie sie vorangehend für die Kolbenbuchse beschrieben wurden. Insofern gelten für die Buchse eine Pleuels die gleichen Vorteile und bevorzugten Ausführungsformen wie für die Kolbenbuchse. Schließlich ist für sämtliche Ausführungsformen eines Pleuels, wie oben beschrieben, darauf hinzuweisen, dass auch diese unabhängig von dem erfindungsgemäßen Kolben und der erfindungsgemäßen Kombination eines Kolbens mit einem Kolbenbolzen ihre Vorteile entfalten und unabhängig davon als Neuerung und als Gegenstand der vorliegenden Anmeldung anzusehen sind. Als derzeit bevorzugte Kombination sei ein Kolben mit einer Buchse in einer der oben beschriebenen Ausführungsformen, mit einem, wie oben beschrieben, beschichteten Kolbenbolzen und ein Pleuel angegeben, das an seinem kleinen Pleuel-Auge buchsenlos ist und eine Ausführungsform der vorangehend beschriebenen Formbohrungen aufweist. Ebenfalls bevorzugt und im Hinblick auf die Kosten günstiger erweist sich eine Kombination eines Kolbens ohne Buchse, jedoch mit quer ausgerichteter ovaler Formbohrung, mit einem beschichteten Kolbenbolzen in einer der vorangehend Ausführungsformen und einem buchsenlosen Pleuel mit einer Formbohrung in einer der oben beschriebenen Ausführungsformen. Ergänzend sei angemerkt, dass in besonderen Anwendungsfällen eine Buchse des Pleuels auch aus austenitischem Grauguss oder austenitischem oder ferritischem Stahl ausgeführt sein könnte. Wenn das Pleuel jedoch mit einer Buchse aus ferritischem Material versehen wird, ergeben sich Vorteile dahingehend, dass der Wärmeausdehnungskoeffizient von ferritischem Material vergleichbar mit dem Wärmeausdehnungskoeffizienten eines üblicherweise geschmiedeten Pleuels ist, so dass sich auch bei Erwärmung keine Lockerung der Verbindung ergibt.

Die Lösung der erfindungsgemäßen Aufgabe erfolgt ferner durch das in Anspruch 14 beschriebene Verfahren. Hierbei wird eine Kolbenbuchse aus austenitischem Grauguss gegossen, bearbeitet und in die Bohrung des Kolbens eingesetzt. Die bevorzugten Ausführungsformen des erfindungsgemäßen Verfahrens entsprechen den bevorzugten Ausführungsformen des dadurch herzustellenden Kolbens. Hierdurch sind die entsprechenden Vorteile erreichbar.

Dies gilt in gleicher Weise für die bevorzugten Ausführungsformen von Verfahren zur Herstellung der Kombinationen eines Kolbens mit einem Kolbenbolzen und/oder einem Pleuel.

Bei der alternativen Ausführungsform, wonach die Kolbenbuchse aus austenitischem Stahl besteht, sind jegliche geeigneten Herstellungsverfahren für eine derartige Buchse denkbar.

## Patentansprüche

1. Kolben für einen Verbrennungsmotor, der eine Kolbenbuchse zur Aufnahme des Kolbenbolzens aufweist, **dadurch gekennzeichnet, dass** die Kolbenbuchse aus austenitischem Grauguss oder austenitischem Stahl besteht.

2. Kolben nach Anspruch 1, **dadurch gekennzeichnet, dass** das Material der Kolbenbuchse Lamellengraphit aufweist.

3. Kolben nach Anspruch 1 oder 2, **dadurch gekennzeichnet, dass** die Kolbenbuchse aus Ni-Resist besteht.

4. Kolben nach zumindest einem der vorangehenden Ansprüche, **dadurch gekennzeichnet, dass** die Kolbenbuchse aus Ni CuCr 1562 besteht.

5. Kombination eines Kolbens nach zumindest einem der vorangehenden Ansprüche, mit einem Kolbenbolzen,
**dadurch gekennzeichnet, dass**
der Kolbenbolzen beschichtet ist.

6. Kombination nach Anspruch 5,
**dadurch gekennzeichnet, dass**
der Kolbenbolzen mit amorphem Kohlenstoff und/oder DLC beschichtet ist.

7. Kombination nach Anspruch 5 oder 6,
**dadurch gekennzeichnet, dass**
der Kolbenbolzen eine Grundschicht und eine verschleißfeste Laufschicht, insbesondere aus Hartkohlenstoff, aufweist.

8. Kombination nach zumindest einem der Ansprüche 5 bis 7,
**dadurch gekennzeichnet, dass**
der Kolbenbolzen ferner eine Einlaufschicht aufweist.

9. Kombination nach zumindest einem der Ansprüche 5 bis 8,
**dadurch gekennzeichnet, dass**
die Beschichtung mittels eines PVD-Verfahrens aufgebracht ist.

10. Kombination nach zumindest einem der Ansprüche 5 bis 9,
**dadurch gekennzeichnet, dass**
der Kolbenbolzen aus Stahl ist.

11. Kolben nach zumindest einem der Ansprüche 1 bis 4 oder Kombination nach zumindest einem der Ansprüche 5 bis 10, ferner mit einem Pleuel.

12. Kombination nach Anspruch 11,
**dadurch gekennzeichnet, dass**
das Pleuel an seinem kleinen Pleuel-Auge eine Formbohrung mit einer vorzugsweise quer ausgerichteten Ovalität und/oder eine Erweiterung an zumindest einem Ende der Bohrung aufweist.

13. Kombination nach Anspruch 11 oder 12,
**dadurch gekennzeichnet, dass**
das Pleuel eine Buchse aus vorzugsweise ferritischem Grauguss aufweist.

14. Verfahren zur Herstellung eines Kolbens für einen Verbrennungsmotor mit folgenden Schritten:
- Gießen einer Kolbenbuchse, die der Aufnahme eines Kolbenbolzens dient, aus austenitischem Grauguss,
- Bearbeiten der Kolbenbuchse,
- Einsetzen der Kolbenbuchse in eine Bohrung eines Kolbens.

15. Verfahren nach Anspruch 14, **dadurch gekennzeichnet, dass** das Material der Kolbenbuchse Lamellengraphit aufweist.

16. Verfahren nach Anspruch 14 oder 15, **dadurch gekennzeichnet, dass** die Kolbenbuchse aus Ni-Resist gegossen wird.

17. Verfahren nach einem der Ansprüche 14 bis 16, **dadurch gekennzeichnet, dass** die Kolbenbuchse aus NI CuCr 1562 gegossen wird.

18. Verfahren zur Herstellung eines Kolbens nach einem der Ansprüche 14 bis 17 in Kombination mit einem Verfahren zur Herstellung eines Kolbenbolzens,
**dadurch gekennzeichnet, dass**
der Kolbenbolzen beschichtet wird.

19. Verfahren nach Anspruch 18,
**dadurch gekennzeichnet, dass**
der Kolbenbolzen mit amorphem Kohlenstoff oder DLC beschichtet wird.

20. Verfahren nach Anspruch 18 oder 19,
**dadurch gekennzeichnet, dass**
der Kolbenbolzen mit einer Grundschicht und einer verschleißfesten Laufschicht, insbesondere aus Hartkohlenstoff, beschichtet wird.

21. Verfahren nach zumindest einem der Ansprüche 18 bis 20,
**dadurch gekennzeichnet, dass**
der Kolbenbolzen ferner mit einer Einlaufschicht beschichtet wird.

22. Verfahren nach zumindest einem der Ansprüche 18 bis 21,
**dadurch gekennzeichnet, dass**
der Kolbenbolzen mittels eines PVD-Verfahrens beschichtet wird.

23. Verfahren nach zumindest einem der Ansprüche 18 bis 22 in Kombination mit einem Verfahren zur Herstellung eines Pleuels, bei dem das Pleuel in seinem Pleuel-Auge mit einer Formbohrung mit einer vorzugsweise quer ausgerichteten Ovalität und/oder einer Erweiterung an zumindest einem Ende der Bohrung versehen wird.

24. Verfahren nach zumindest einem der Ansprüche 18 bis 23 in Kombination mit einem Verfahren zur Herstellung eines Pleuels, bei dem das Pleuel mit einer Buchse aus vorzugsweise ferritischem Grauguss versehen wird.
